# FASCICULE DE BREVET EUROPEEN

(11) **EP 3 241 468 B1**
(45) Date de publication et mention de la délivrance du brevet: **24.10.2018**
(21) Numéro de dépôt: 17164779.5
(22) Date de dépôt: 04.04.2017
(51) Int. Cl.: A47J 45/07

(54) **USTENSILE DE CUISINE À POIGNÉE AMOVIBLE**
KÜCHENGERÄT MIT ENTFERNBAREM GRIFF
COOKING UTENSIL WITH REMOVABLE HANDLE

(30) Priorité: 03.05.2016 FR 1654008; 02.06.2016 FR 1655008
(43) Date de publication de la demande: 08.11.2017
(73) Titulaire: CRISTEL, 25490 Fesches le Chatel (FR)
(72) Inventeur: DODANE, Paul, 25490 FESCHES LE CHATEL (FR); BRUGGER, Emmanuel, 25230 DASLE (FR); DROUVILLE, Pascal, 90400 DANJOUTIN (FR)
(74) Mandataire: Hugues, Catherine

(56) Documents cités:
- FR-A1- 3 016 787
- GB-A- 853 161

## Description

L'invention concerne un ustensile de cuisine comprenant un récipient et une poignée, sur le pourtour supérieur externe du récipient s'étendant une patte de fixation pourvue d'au moins une ouverture pour l'engagement et la réception d'une extrémité en forme de crochet d'une patte d'accrochage que comporte la poignée, sur cette dernière étant encore monté en coulissement un loquet susceptible d'occuper au moins une position de déverrouillage et une position verrouillée dans laquelle il est repoussé sous l'action de moyens de rappel, pour venir s'étendre, du côté opposé à la patte d'accrochage, sous la patte de fixation du récipient.

La présente invention concerne le domaine des ustensiles de cuisine et plus particulièrement ceux équipés d'une poignée amovible.

On connaît d'ores et déjà de nombreux ustensiles de cuisine sous forme de récipients qui, plutôt que d'être équipés d'une poignée fixe, comportent, sensiblement sur leur pourtour supérieur externe, une patte de fixation, très souvent dénommée oreille de par la forme de cette patte, sur laquelle peut venir s'accrocher une poignée amovible. L'intérêt d'une telle poignée amovible est multiple. En particulier, elle peut être retirée du récipient une fois celui-ci disposé sur une plaque de cuisson de manière à lui conférer un moindre encombrement. Par ailleurs, le caractère amovible de la poignée facilite grandement le rangement de ces ustensiles de cuisine, mais aussi leur nettoyage, etc...

Ainsi, parmi ces ustensiles de cuisine à poignée amovible, on connait plus particulièrement ceux dont la patte de fixation en bordure supérieure du récipient comporte au moins une ouverture, généralement oblongue assimilable à une fente, ouverture dans laquelle va pouvoir s'engager, par le dessus, une extrémité en forme de crochet d'une patte d'accrochage que comporte la poignée. Sous cette simple coopération entre cette extrémité en forme de crochet de la patte d'accrochage de la poignée et l'ouverture correspondante dans l'oreille du récipient, il est possible de manipuler ce dernier au moyen de cette poignée.

Cependant, pour sécuriser cette dernière sur cette patte de fixation du récipient, elle est encore pourvue d'un loquet ou verrou dont une extrémité est susceptible de s'étendre sous la patte de fixation du récipient, lorsque repoussée en position de verrouillage. En somme, dans cette position de verrouillage, la patte de fixation du récipient s'étend entre ce verrou et la patte d'accrochage de la poignée. Celle-ci est habituellement équipée, en partie supérieure, d'un bouton de commande permettant d'agir sur ce verrou, très fréquemment soumis à l'action de moyens de rappel élastique tendant à le repousser dans sa position de verrouillage.

Quelle que soit la qualité de fabrication respectée, un jeu fonctionnel persiste entre la poignée et la patte de fixation du récipient, donnant une impression peut sécurisante de risque de décrochement de la poignée.

A ce propos, il est d'ores et déjà connu par le document FR 3 016 787 un ustensile de cuisine comprenant un récipient et une poignée amovible. Dans ce cas la patte de fixation équipant le récipient est pourvue de deux logements pour la réception, chacun, d'une languette conformée en forme de crochet équipant la patte d'accrochage de la poignée. Ces languettes sont mobiles en écartement l'une par rapport à l'autre sous l'impulsion de moyens de rappel élastique, tendant à les repousser dans une position de verrouillage, c'est-à-dire d'accrochage dans les ouvertures de cette patte de fixation du récipient.

Par ailleurs, un organe déformable sous forme d'une pastille en silicone écrasable est interposée entre la patte d'accrochage de la poignée et la patte de fixation du récipient lorsque ces éléments sont verrouillés l'un sur l'autre.

En somme, entre le moment où la poignée est accrochée sur le récipient et avant verrouillage de l'un sur l'autre, s'opère un écrasement de cette pastille en silicone de manière à rattraper le jeu fonctionnel habituel entre ces éléments.

A noter que dans le document FR 3 016 788 il est décrit un état de la technique similaire, si ce n'est que la pastille en silicone est pourvue en son centre d'un picot de centrage prévu pour venir se loger dans une cavité ménagée en correspondance sur la patte de fixation du récipient.

Si une telle pastille en silicone répond au problème de rattrapage de jeu entre la poignée amovible et le récipient de l'ustensile de cuisine, elle rend quelque peu contraignante la mise en coopération de ces pièces.

En effet, au moment d'assurer cette coopération il convient d'assurer l'écrasement de cette pastille avant qu'intervienne le verrouillage de la patte d'accrochage de la poignée sur la patte de fixation du récipient. Pour obtenir cet écrasement, il est nécessaire d'exercer une certaine pression au moyen de la poignée sur cette patte de fixation d'où peut résulter un basculement du récipient et, donc, un risque de déversement.

L'opération de déverrouillage s'en trouve, elle aussi, plus difficile. En effet, cette pastille en silicone écrasée augmente sensiblement les forces de frottement entre la patte de fixation et le verrou engendrant un effort de commande de déverrouillage plus important.

La présente invention se veut à même de répondre aux inconvénients de cet état de la technique.

C'est dans le cadre d'une première démarche inventive que l'on a imaginé que ce rattrapage du jeu entre la patte d'accrochage d'une poignée et la patte de fixation d'un récipient résulte, au moins en partie, d'un effet de serrage procuré par le verrou de la patte d'accrochage de la poignée sur la patte de fixation du récipient.

Plus particulièrement, on a pensé que cet effet de serrage résulte d'un déplacement de ce verrou suivant une direction qui n'est pas parallèle au plan de la fixation.

De manière complémentaire on a encore imaginé associer à l'extrémité en forme de crochet de la patte d'accrochage et/ou à l'ouverture dans la patte de fixation pour la réception de cette extrémité en forme de crochet d'un élément amortisseur déformable ayant pour fonction d'absorber le jeu fonctionnel, souvent indispensable pour autoriser la coopération de ces pièces.

Les avantages découlant de la présente invention consistent en ce que le rattrapage de jeu entre poignée et récipient résultant, essentiellement, d'une action de serrage sous l'impulsion des moyens de rappel, par exemple élastique, du verrou sur la patte de fixation du récipient, ceci en coopération avec la patte d'accrochage de la poignée, aucun effort complémentaire n'est à produire pour assurer cette coopération entre la poignée et le récipient, ceci en comparaison à la solution technique antérieure où le verrou n'opère pas une telle action de serrage.

De même, en l'absence de tout organe déformable précontraint entre la poignée et le récipient, la commande de déverrouillage reste tout aussi aisée.

A cet effet, l'invention concerne un ustensile de cuisine comprenant un récipient et une poignée, sur le pourtour supérieur externe du récipient s'étendant une patte de fixation ou oreille pourvue d'au moins une ouverture pour l'engagement et la réception d'une extrémité en forme de crochet d'une patte d'accrochage que comporte la poignée, sur cette dernière étant encore monté en coulissement un loquet susceptible d'occuper au moins une position de déverrouillage et une position verrouillée dans laquelle il est repoussé sous l'action de moyens de rappel pour venir s'étendre, du côté opposé à la patte d'accrochage, sous la patte de fixation du récipient, caractérisé par le fait que le loquet est monté en coulissement sur la poignée suivant une direction formant un angle aigu par rapport à la patte de fixation pour, partant d'une position déverrouillée, écartée de cette patte de fixation, se resserrer en directement de cette dernière sous l'action desdits moyens de rappel en position de verrouillage.

Avantageusement, mais non nécessairement, les moyens de rappel sont de type élastique.

Selon une autre particularité de la présente invention, l'extrémité en forme de crochet de la patte d'accrochage de la poignée et/ou l'ouverture dans la patte de fixation pour la réception de ladite extrémité est pourvue d'un élément amortisseur déformable apte à absorber le jeu fonctionnel.

D'autres buts et avantages de la présente invention apparaitront au cours de la description qui va suivre se rapportant à un exemple de réalisation donné à titre indicatif et non limitatif.

La compréhension de cette description sera facilitée en se référant au dessin ci-joint dans lequel :
- La figure 1 est une illustration schématisée et en perspective d'un ustensile de cuisine selon l'invention,
- La figure 2 est une représentation schématisée en coupe partielle de la poignée en coopération avec la patte de fixation du récipient (non représenté) de l'ustensile de cuisine selon l'invention,
- La figure 3 est une vue de détail de la figure 2

Telle que représentée dans les figures du dessin ci-joint la présente invention a trait à un ustensile de cuisine (1) comprenant un récipient (2) et une poignée (3). Sur le pourtour supérieur externe (4) du récipient (2) s'étend au moins une patte de fixation (5), souvent encore dénommée oreille, avec laquelle vient coopérer une patte d'accrochage (6) que comporte à une extrémité (7) la poignée (3).

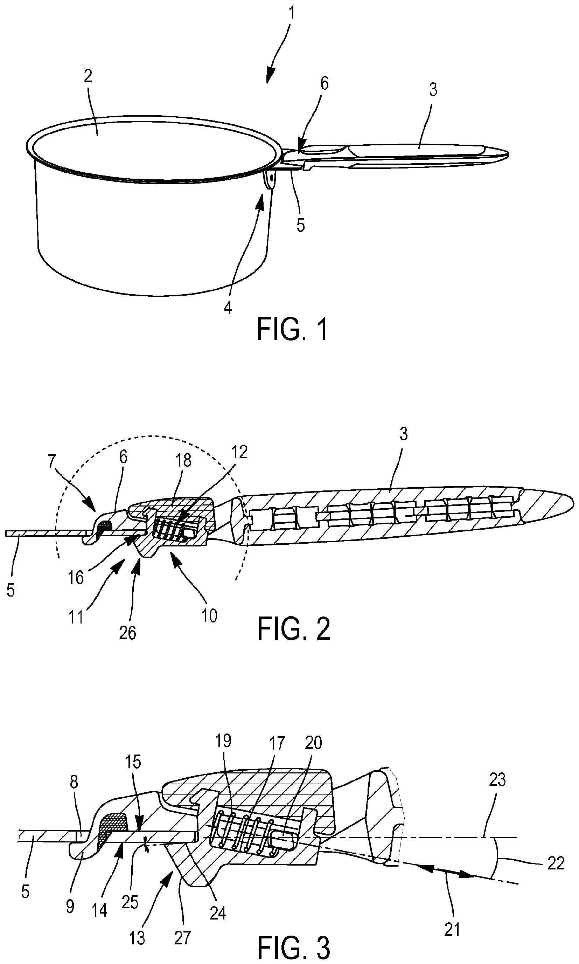

En se référant plus particulièrement aux figures 2 et 3, la patte de fixation (5) comporte au moins une ouverture (8) généralement de forme oblongue et s'entendant, préférentiellement, de manière tangentielle au récipient (2), voire de manière coaxiale dans la mesure où cette ouverture (8) peut adopter une forme rectiligne ou courbe.

Cette ouverture (8) est prévue pour l'engagement et la réception d'une extrémité (9) en forme de crochet que comporte la patte d'accrochage (6) correspondant à la poignée (3).

Sur cette dernière, préférentiellement, mais non limitativement, sur la patte d'accrochage (6), est monté en coulissement un loquet (10) susceptible d'occuper au moins une position de déverrouillage (non visible sur les figures) et une position verrouillée (11) dans laquelle il est repoussé sous l'action de moyens de rappel (12).

Précisément, dans cette position verrouillée (11), ce loquet (10) vient s'étendre, plus particulièrement au travers de son extrémité (13), sous la patte de fixation (5), en somme du côté opposé (14) par rapport à celui (15) au-dessus duquel s'étend la patte d'accrochage (6).

Dans le mode de réalisation illustré, le loquet (10) vient coopérer avec le bord périphérique (16) de la patte de fixation (5). Il convient d'observer que la présente invention n'est cependant pas limitée à un tel mode de réalisation.

De manière plus particulière, le loquet (10) s'étend sous la patte d'accrochage (6) tout en étant monté en coulissement dans un logement (17) sous forme d'une ouverture dans cette patte d'accrochage (6). De plus le corps de ce loquet (10) vient s'étendre au travers de ce logement (17) et il lui est solidarisé un bouton de commande (18), préférentiellement en un matériau thermiquement isolant.

Ainsi, au travers de bouton de commande (18), accessible sur le dessus de la patte d'accrochage (6), l'utilisateur peut repousser le loquet (10) dans sa position déverrouillée, ceci contre l'action desdits moyens de rappel (12).

A noter tout particulièrement à ce sujet, que ces moyens de rappel (12) peuvent être de type élastique et notamment se présenter sous forme d'un ressort, sachant qu'ils peuvent emprunter bien d'autres formes de réalisation. A titre d'exemple, de tels moyens de rappel (12) peuvent être constitués par un pour plusieurs aimants, notamment deux aimants agissant en opposition. Ainsi, sous l'action de la commande de déverrouillage, l'un de ces aimants, porté par le loquet, peut venir se rapprocher d'un autre aimant fixe monté en opposition d'aimantation, de sorte qu'en relâchant la commande de déverrouillage, ces aimants se repoussent en rappelant le loquet dans sa position de verrouillage.

Bien d'autres formes de réalisation de ces moyens de rappel (12) sont envisageables, tout en étant à la portée de l'homme du métier, notamment l'usage d'actionneur électromagnétique, voire de moteur.

Pour en revenir à l'exemple de réalisation non limitatif de l'invention, tel qu'illustré dans les figures 1 à 3, ces moyens de rappel (12) sont de type élastique et représentés par un ressort (19) prenant position sensiblement dans le logement (17) en venant s'interposer entre le loquet (10) et une butée (20) ménagée dans ce logement (17) pour pouvoir assurer sa fonction de rappel dudit loquet (10) en position de verrouillage (11).

Selon l'invention, le loquet (10) est monté en coulissement sur la poignée (3) suivant une direction (21) formant un angle aigu (22) par rapport au plan (23) de la patte de fixation (5) pour, partant d'une position déverrouillée, écartée de ladite patte de fixation (5), se resserrer en direction de cette dernière sous l'action des moyens de rappel (12) en position de verrouillage.

Selon un mode de réalisation avantageux, à son extrémité (13) le loquet (10) comporte une surface d'appui (24) destinée à coopérer avec le côté opposé (14) de la patte de fixation (5) en repoussant celle-ci en direction de la patte d'accrochage (6) de la poignée (3). Préférentiellement, cette surface d'appui (24) forme, dans cette position verrouillée (11), un angle de dépouille (25) avec ce côté opposé (14) de la patte de fixation (5), ceci de manière à éviter tout effet de coin de l'action du loquet (10).

Selon encore un mode de réalisation avantageux, le loquet (10), à cette extrémité (13) destinée à coopérer avec la patte de fixation (5), comporte, sur son côté inférieur (26), un chanfrein d'engagement (27). Au travers de ce dernier le loquet (10) est naturellement repoussé dans sa direction de déverrouillage au contact avec la patte de fixation (5), au moment d'engager la poignée (3) sur le récipient (2).

Selon encore une autre particularité de la présente invention, selon le cas sur l'extrémité (9) en forme de crochet de la patte d'accrochage (6) et/ou dans l'ouverture (8) dans la patte de fixation (5) pour la réception de cette extrémité (9) est ménagé un élément amortisseur déformable (28) destiné à absorber le jeu fonctionnel entre cette extrémité (9) en forme de crochet et ladite ouverture (8).

Ainsi et comme visible sur les figures 2 et 3, cet élément amortisseur déformable (28) peut être associé à la patte d'accrochage (6) sensiblement dans l'angle de rotation entre la poignée (3) et la patte de fixation (5). Se situant, précisément, à hauteur de cet angle de rotation, cet élément en matériau déformable (28) n'est d'aucune contrainte, que ce soit lors de la mise en place ou du retrait de la poignée (3).

Les avantages découlant de la présente invention consiste, de manière essentielle, en l'absence de jeu entre la poignée et le récipient, et, ceci, sans que la mise en place de la poignée nécessite la mise sous contrainte d'un quelconque élément déformable. De plus, la commande de déverrouillage peut s'opérer avec la même aisance qu'une poignée n'assurant aucune fonction de rattrapage de jeu.

## Revendications

1. Ustensile de cuisine comprenant un récipient (2) et une poignée (3), sur le pourtour supérieur externe du récipient (2) s'étendant une patte de fixation (5) ou oreille pourvue d'au moins une ouverture (8) pour l'engagement et la réception d'une extrémité (9) en forme de crochet d'une patte d'accrochage (6) que comporte la poignée (3), sur cette dernière étant encore monté en coulissement un loquet (10) susceptible d'occuper au moins une position de déverrouillage et une position verrouillée (11) dans laquelle il est repoussé sous l'action de moyens de rappel (12) pour venir s'étendre, du côté opposé (14) par rapport à la patte d'accrochage (6), sous la patte de fixation (5) du récipient (2), **caractérisé par le fait que** le loquet (10) est monté en coulissement sur la poignée (3) suivant une direction (21) formant un angle (22) aigu par rapport au plan (23) de la patte de fixation (5) pour, partant d'une position déverrouillée, écartée de cette patte de fixation (5), se resserrer en directement de cette dernière sous l'action desdits moyens de rappel (12) en position de verrouillage (11).

2. Ustensile de cuisine selon la revendication 1, **caractérisé en ce que** l'extrémité (9) en forme de crochet de la patte d'accrochage (6) de la poignée (3) et/ou l'ouverture (8) dans la patte de fixation (5) pour la réception de ladite extrémité (9) est pourvue d'un élément amortisseur déformable (28) apte à absorber le jeu fonctionnel entre cette extrémité (9) en forme de crochet et ladite ouverture (8).

3. Ustensile de cuisine selon la revendication 1 ou 2, **caractérisé en ce que** le loquet (10) comporte à son extrémité (13) une surface d'appui (24) destinée à coopérer avec la patte de fixation (5) en repoussant celle-ci en direction de la patte d'accrochage (6) de la poignée (3), cette surface d'appui (24) formant, dans la position verrouillée (11), un angle de dépouille (25) avec la patte de fixation (5).

4. Ustensile de cuisine selon l'une quelconque des revendications précédentes, **caractérisé en ce que** les moyens de rappel (12) sont de type élastique.

5. Ustensile de cuisine selon l'une quelconque des revendications précédentes, **caractérisé en ce que** le loquet (10) s'étend sous la patte d'accrochage (6) tout en étant monté en coulissement dans un logement (17) sous forme d'une ouverture dans cette patte d'accrochage (6).

6. Ustensile de cuisine selon la revendication 4, **caractérisé en ce que** le loquet (10) comporte un corps venant s'étendre au travers du logement (17) dans la patte d'accrochage (6) et il lui est solidarisé un bouton de commande (18), préférentiellement en un matériau thermiquement isolant.

7. Ustensile de cuisine selon la revendication 5 ou 6, **caractérisé en ce que** les moyens de rappel (12), de type élastique, se présentent sous forme d'un ressort (19) prenant position sensiblement dans le logement (17) en venant s'interposer entre le loquet (10) et une butée (20) ménagée dans ce logement (17) pour assurer sa fonction de rappel dudit loquet (10) en position de verrouillage (11).

## Patentansprüche

1. Küchengerät, umfassend einen Behälter (2) und einen Griff (3), wobei sich auf dem äußeren oberen Umfang des Behälters (2) ein Befestigungsfuß (5) oder Flügel erstreckt, der mit mindestens einer Öffnung (8) für den Eingriff und die Aufnahme eines Endes (9) in Form eines Hakens eines Befestigungsfußes (6) versehen ist, der den Griff (3) umfasst, wobei auf diesem Letzteren auch gleitend ein Schnäpper (10) montiert ist, der mindestens eine Entriegelungsposition und eine Verriegelungsposition (11) einnehmen kann, in der er unter der Einwirkung von Rückstellmitteln (12) zurückgestoßen wird, um sich, von der entgegengesetzten Seite (14) mit Bezug auf den Befestigungsfuß (6), unter dem Fixierungsfuß (5) des Behälters (2) zu erstrecken, **gekennzeichnet durch** die Tatsache, dass der Schnäpper (10) gleitend auf dem Griff (3) gemäß einer Richtung (21) montiert ist, die einen spitzen Winkel (22) mit Bezug auf die Ebene (23) des Fixierungsfußes (5) bildet, um sich, ausgehend von einer entriegelten Position, die von diesem Fiexierungsfuß (5) entfernt ist, in Richtung dieser Letzteren unter der Einwirkung der Rückstellmittel (12) in der Verriegelungsposition (11) zu schließen.

2. Küchengerät nach Anspruch 1, **dadurch gekennzeichnet, dass** das Ende (9) in Form eines Hakens des Befestigungsfußes (6) des Griffs (3) und/oder die Öffnung (8) im Fixierungsfuß (5) zur Aufnahme des Endes (9) mit einem verformbaren Stoßdämpferelement (28) versehen ist, das ausgelegt ist, um ein funktionelles Spiel zwischen diesem Ende (9) in Form eines Hakens und der Öffnung (8) zu absorbieren.

3. Küchengerät nach Anspruch 1 oder 2, **dadurch gekennzeichnet, dass** der Schnäpper (10) an seinem Ende (13) eine Auflagefläche (24) umfasst, die ausgelegt ist, um mit dem Fixierungsfuß (5) zusammenzuarbeiten, indem dieser in Richtung des Befestigungsfußes (6) des Griffs (3) zurückgeschoben wird, wobei diese Auflagefläche (24), in der verriegelten Position (11), einen Freiwinkel (25) mit dem Fixierungsfuß (5) bildet.

4. Küchengerät nach einem beliebigen der vorhergehenden Ansprüche, **dadurch gekennzeichnet, dass** die Rückstellmittel (12) der elastischen Art sind.

5. Küchengerät nach einem beliebigen der vorhergehenden Ansprüche, **dadurch gekennzeichnet, dass** sich der Schnäpper (10) unter dem Befestigungsfuß (6) erstreckt und gleichzeitig gleitend in einer Aufnahme (17) in Form einer Öffnung in diesem Befestigungsfuß (6) montiert ist.

6. Küchengerät nach Anspruch 4, **dadurch gekennzeichnet, dass** der Schnäpper (10) einen Körper umfasst, der sich über die Aufnahme (17) im Befestigungsfuß (6) erstreckt und ein Steuerknopf (18), vorzugsweise aus einem thermisch isolierenden Material, fest mit ihm verbunden ist.

7. Küchengerät nach Anspruch 5 oder 6, **dadurch gekennzeichnet, dass** die Rückstellmittel (12) elastischer Art die Form einer Feder (19) aufweisen, die sich im Wesentlichen in der Aufnahme (17) positioniert, indem sie sich zwischen den Schnäpper (10) und einen Anschlag (20) stellt, der in dieser Aufnahme (17) angeordnet ist, um seine Funktion des Rückstellens des Schnäppers (10) in der Verriegelungsposition (11) sicherzustellen.

## Claims

1. A kitchen utensil including a container (2) and a handle (3), on the outer upper perimeter of the container (2) with an extending fastening tab (5) or lug provided with at least one opening (8) for the engagement and reception of a hook-forming end (9) of a hooking tab (6) comprised by the handle (3), a latch (10) still being mounted on the latter that is able to occupy at least one unlocked position and a locked position (11) in which it is pushed back under the action of return means (12) to extend, on the opposite side (14) relative to the hooking tab (6), below the fastening tab (5) of the container (2), **characterized in that** the latch (10) is mounted sliding on the handle (3) along a direction (21) forming an acute angle (22) relative to the plane (23) of the fastening tab (5) in order, starting from an unlocked position, separated from said fastening tab (5), to tighten toward the latter under the action of said return means (12) in the locked position (11).

2. The kitchen utensil according to claim 1, **characterized in that** the hook-forming end (9) of the hooking tab (6) of the handle (3) and/or the opening (8) in the fastening tab (5) for receiving said end (9) is provided with a deformable damping element (28) able to absorb the functional play between said hook-forming end (9) and said opening (8).

3. The kitchen utensil according to claim 1 or 2, **characterized in that** the latch (10) comprises, at its end (13), a bearing surface (24) intended to cooperate with the fastening tab (5) while pushing the latter back toward the hooking tab (6) of the handle (3), this bearing surface (24) forming, in the locked position (11), an undercut angle (25) with the fastening tab (5).

4. The kitchen utensil according to any one of the preceding claims, **characterized in that** the return means (12) are of the resilient type.

5. The kitchen utensil according to any one of the preceding claims, **characterized in that** the latch (10) extends below the hooking tab (6) while being mounted sliding in a housing (17) in the form of an opening in said hooking tab (6).

6. The kitchen utensil according to claim 4, **characterized in that** the latch (10) comprises a body extending through the housing (17) and the hooking tab (6) and a control button (18) is secured to it, preferably made from a thermally insulating material.

7. The kitchen utensil according to claim 5 or 6, **characterized in that** the return means (12), of the resilient type, assume the form of a spring (19) substantially positioned in the housing (17) while being inserted between the latch (10) and a stop (20) arranged in said housing (17) to perform its function of returning said latch (10) to the locked position (11).
